# EUROPEAN PATENT SPECIFICATION

(11) **EP 3 312 946 B1**
(45) Date of publication and mention of the grant of the patent: **20.11.2019**
(21) Application number: 16813911.1
(22) Date of filing: 08.06.2016
(51) Int. Cl.: H04Q 9/00, G08B 13/16, G08B 25/08, H01R 13/66, H01R 31/06

(54) **INSERTION CONNECTOR AND DEVICE CONTROL SYSTEM USING SAME**
EINSTECKBARER VERBINDER UND VORRICHTUNGSSTEUERUNGSSYSTEM MIT VERWENDUNG DAVON
CONNECTEUR D'INSERTION ET SYSTÈME DE COMMANDE DE DISPOSITIF UTILISANT CE DERNIER

(30) Priority: 22.06.2015 JP 2015124825
(43) Date of publication of application: 25.04.2018
(73) Proprietor: Panasonic Intellectual Property Management Co., Ltd., Osaka-shi, Osaka 540-6207 (JP)
(72) Inventor: HANAZONO, Masaya, Osaka-shi, Osaka 540-6207 (JP); FUKUSIMA, Minoru, Osaka-shi, Osaka 540-6207 (JP); KIMURA, Katsuhiko, Osaka-shi, Osaka 540-6207 (JP)
(74) Representative: Appelt, Christian W.
(86) International application number: PCT/JP2016/002764
(87) International publication number: WO 2016/208135

(56) References cited:
- WO-A1-2014/134217
- GB-A- 2 378 300
- JP-A- H03 214 995
- JP-A- H09 138 894
- JP-A- 2005 328 410
- JP-A- 2006 067 127
- JP-A- 2007 150 622
- JP-A- 2014 185 965
- JP-U- 3 189 513
- US-A1- 2013 039 497
- US-A1- 2015 094 544

## Description

### Technical Field

The present invention generally relates to a device control systems including plug-in connectors. The plug-in connectors, provided for wiring, each include an attachment plug and a plug receptacle.

### Background Art

There is a known plug-in connector for wiring, including an attachment plug and a plug receptacle, and having a communication function (see, for example, Patent Literature 1). Patent Literature 1 describes an electric power measuring tap (plug-in connector) having a function of measuring electric power supplied to an electrical device connected to the electric power measuring tap. The electric power-measuring tap of Patent Literature 1 also has a communication function for transmitting electric power consumption information denoting a measurement result of the electric power to a wireless adapter by a wireless signal.

WO2014/134217 A1 describes a threat sensing system including a plurality of threat sensing devices distributed throughout a school or facility, with each of the threat sensing devices comprising one or more acoustic sensors, one or more gas sensors, and a communication circuit or communication device configured to output sensor data to a system gateway. The system gateway is configured to receive and process the sensor data output from the threat sensing devices and determine whether the processed sensor data corresponds to one of a predetermined plurality of known threats (e.g., a gunshot) and, if so, to communicate the existence of the threat, the processed sensor information, and/or predetermined messaging information to one or more recipient devices (e.g., first responders, dispatchers).

In plug-in connectors having the communication function, a reduction in communication traffic has been desired.

### Citation List

### Patent Literature

Patent Literature 1: JP 2014-185965 A

### Summary of Invention

In view of the foregoing, it is an object of the present invention to provide a plug-in connector which enables a reduction in communication traffic and a device control system using the plug-in connector.

The present invention relates to a device control system according to independent claim 1.

Preferred embodiments are described in dependent claims 2 to 6.

### Brief Description of Drawings

FIG. 1 is a block diagram illustrating a device control system according to a first embodiment of the present invention;
FIG. 2A is an exterior perspective view illustrating a plug-in connector according to the first embodiment of the present invention, and FIG. 2B is an exterior perspective view illustrating the plug-in connector, wherein a plug receptacle of a socket and an attachment plug of a power supply cable are connected to the plug-in connector;
FIG. 3 is an exterior perspective view illustrating a plug-in connector according to a first variation of the first embodiment of the present invention;
FIG. 4A is an exterior perspective view illustrating a plug-in connector according to a second variation of the first embodiment of the present invention, and FIG. 4B is a top view illustrating the plug-in connector;
FIG. 5 is a block diagram illustrating a device control system according to a second embodiment of the present invention; and
FIG. 6 is a block diagram illustrating a device control system according to a third embodiment of the present invention.

### Description of Embodiments

With reference to the drawings, embodiments of the present invention will be described below.

### First Embodiment

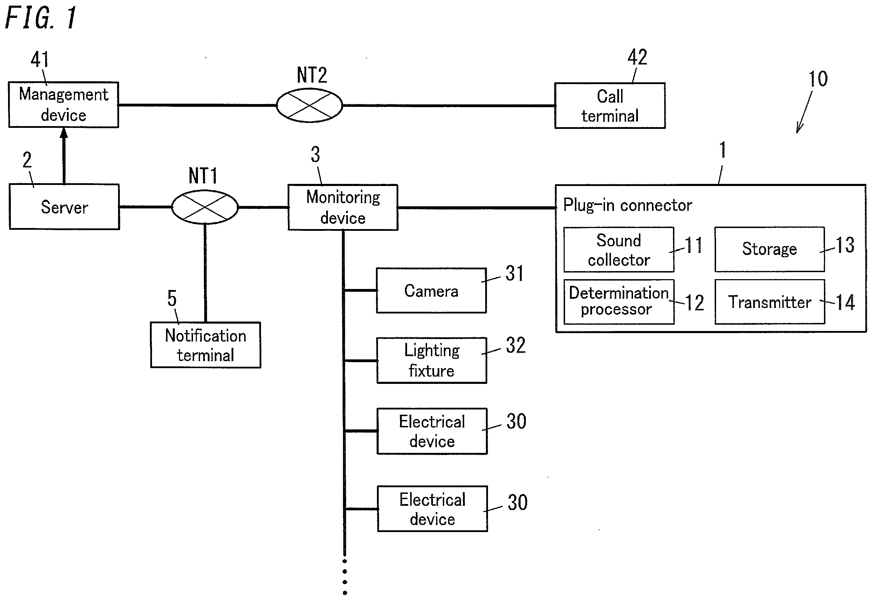

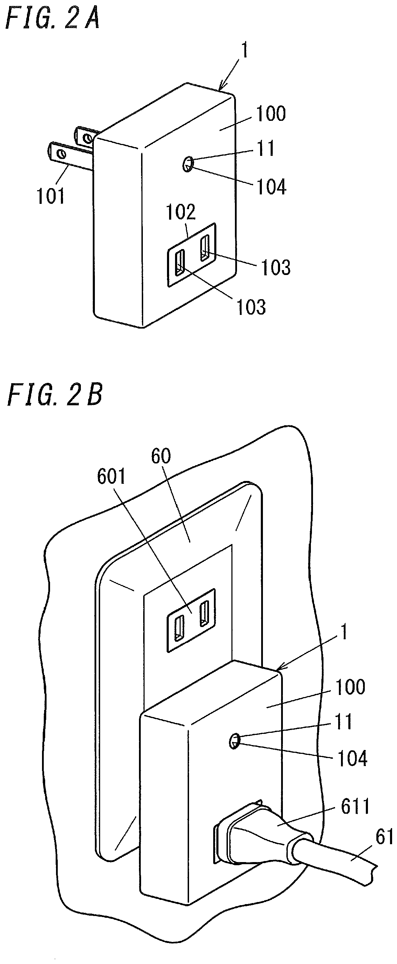

FIG. 1 shows blocks of a device control system 10 with a plug-in connector 1. Each of FIGS. 2A and 2B shows an exterior perspective view of the plug-in connector 1. The plug-in connector 1 is a plug-in connector (a so-called power supply tap) for wiring, including an attachment plug 101 and a plug receptacle 102 which are electrically connected to each other. The attachment plug 101 is configured to be connected to a plug receptacle 601 of a socket 60 (receptacle). The plug receptacle 102 is configured to be connected to an attachment plug 611 of a power supply cable 61.

The plug-in connector 1 of the present embodiment includes a sound collector 11, a determination processor 12, a storage (device) 13, and a transmitter 14. The plug-in connector 1 has a communication function of transmitting a notification signal denoting an occurrence of a specific sound to a server 2 (reception device) when the specific sound is generated around the plug-in connector 1. The device control system 10 of the present embodiment includes the plug-in connector 1 and the server 2. The server 2 is configured to control a device. The configurations of the plug-in connector 1 and the device control system 10 will be described in detail below.

The sound collector 11 includes, for example, a microphone, and is configured to collect a sound generated around the plug-in connector 1 to convert the collected sound into a sound signal in the form of an electric signal. Then, the sound collector 11 is to output the sound signal to the determination processor 12.

The determination processor 12 is configured to determine whether or not the sound generated around the plug-in connector 1 is the specific sound on the basis of the sound signal generated by the sound collector 11. When the sound generated around the plug-in connector 1 is the specific sound, the determination processor 12 determines the occurrence of an event involving generation of the specific sound around the plug-in connector 1. In the present embodiment, a plurality of types of sounds are set as specific sounds in the determination processor 12 in advance, and the determination processor 12 is to determine the presence or absence of an event where any of the plurality of types of specific sounds is generated. Examples of the specific sound include a "glass breaking sound", a "handclap (handclap sound)", "the bark of a dog", and a "loud sound". Note that the types of the specific sounds are not limited to the examples mentioned above but may be other sounds.

The storage 13 includes, for example, electrically erasable programmable read-only memory (EEPROM) and stores a plurality of pieces of reference data corresponding to the plurality of specific sounds on a one-to-one basis. The reference data is data based on a sound signal corresponding to the specific sound.

The determination processor 12 is configured to compare the sound signal generated by the sound collector 11 with the respective reference data stored in the storage 13 to determine the presence or absence of the event on the basis of a comparison result. Specifically, the determination processor 12 is to compare audio characteristics of the sound signal generated by the sound collector 11 with audio characteristics of each of the plurality of pieces of reference data stored in the storage 13. The audio characteristics here denote a sound pressure level (SPL), a frequency characteristic, a waveform pattern (a time change characteristic of the sound pressure level), and the like. If extracting reference data which matches with the audio characteristics of the sound signal generated by the sound collector 11, the determination processor 12 determines that the specific sound corresponding to the extracted reference data is generated. Note that "reference data which matches with the audio characteristics of the sound signal generated by the sound collector 11" is reference data having similar audio characteristics to the audio characteristics of the sound signal generated by the sound collector 11 and corresponding to the specific sound which can be deemed to be the same type as the sound collected by the sound collector 11. The following description is directed to an example in which sounds collected by the sound collector 11 are distinguished by the determination processor 12.
(1) When the sound collector 11 collects a sound generated at breakage of a window glass of a dwelling house by an intruder, the determination processor 12 extracts reference data corresponding to a specific sound "glass breaking sound" similar to the frequency characteristic of the sound signal generated by the sound collector 11. Then, the determination processor 12 determines that the specific sound "glass breaking sound" is generated.
(2) When the sound collector 11 collects a handclap sound at a predetermined rhythm (e.g., three times per two seconds), the determination processor 12 extracts reference data corresponding to a specific sound "handclap" similar to the frequency characteristic and the waveform pattern of the sound signal generated by the sound collector 11. Then, the determination processor 12 determines that the specific sound "handclap" is generated.

Moreover, for reference data corresponding to a specific sound "loud sound", a prescribed sound pressure level is set as the threshold. When the sound pressure level of the sound collected by the sound collector 11 is higher than sound pressure level denoted by the reference data corresponding to the specific sound "loud sound", the determination processor 12 extracts reference data corresponding to the specific sound "loud sound" and determines that the specific sound "loud sound" is generated. Note that the sound pressure level set for the specific sound "loud sound" is desirably adjusted with reference to the sound pressure level of a sound generated in the daily life of a user of the plug-in connector 1 so that a sound generated in daily life is not identified as the specific sound "loud sound".

Moreover, when the reference data suited for the audio characteristics of the sound signal generated by the sound collector 11 is not found in the storage 13, the determination processor 12 determines that an event involving generation of the specific sound does not occur.

The transmitter 14 includes a communication interface and is configured to transmit a determination result by the determination processor 12 as a notification signal to the server 2. Specifically, the transmitter 14 is to transmit the notification signal to the server 2 via a monitoring device 3. A communication method between the transmitter 14 and the monitoring device 3 adopts, for example, wired communication using power line communication (PLC), wireless communication using a wireless signal as a communication medium, or the like. The monitoring device 3 has a function as a router and a modem (or an optical network unit (ONU)) and is electrically connected to the server 2 via an electric network NT1 (e.g., the Internet). The transmitter 14 will transmit the determination result by the determination processor 12 as a notification signal to the server 2 via the monitoring device 3. Note that when the determination processor 12 determines that "an event involving generation of the specific sound does not occur", the transmitter 14 does not transmit the notification signal to the server 2.

The server 2 is configured to control a device by using the received notification signal as a trigger. Specifically, the server 2 is configured to output a device control command based on the determination result by the determination processor 12 denoted by the received notification signal. In the present embodiment, examples of the device to be controlled by the server 2 includes a camera 31, a lighting fixture 32 and a plurality of electrical devices 30, which are connected to be able to communicate with the monitoring device 3, and the examples further includes a call terminal 42 provided in a dwelling house of a user of the plug-in connector 1, and a notification terminal 5 of the user.

For example, when the server 2 receives a notification signal denoting a determination result that the specific sound "glass breaking sound" is generated, the server 2 determines that an abnormality occurs around the plug-in connector 1. In this case, the server 2 outputs a control command for causing the camera 31 (network camera) to capture (an) images. Thus, for example, when an intruder breaks a window glass to enter the dwelling house, the camera 31 is automatically turned on in response to a window glass breaking sound, thereby improving the security. Moreover, the server 2 notifies, via the electric network NT1, the notification terminal 5 (e.g., smartphone) of a user that the specific sound "glass breaking sound" is generated. Thus, even when the user is out of the dwelling house, the user can know the occurrence of the abnormality in the dwelling house. Furthermore, when the server 2 determines the occurrence of an abnormality around the plug-in connector 1, the server 2 notifies a management device 41 of the occurrence of the abnormality in the dwelling house of the user. The management device 41 contacts the call terminal 42 provided in the dwelling house of the user via a telephone line NT2 to check the safety of the user. The call terminal 42 desirably has a hands-free function.

Note that a sound based on which the server 2 determines the occurrence of an abnormality around the plug-in connector 1 is not limited to the "glass breaking sound". For example, when a loud sound is generated or when the bark of a dog continues for a definite time period, the server 2 determines the occurrence of an abnormality around the plug-in connector 1. Moreover, the server 2 may have a home mode and an away mode as operation modes, wherein the home mode is set when a user is in the dwelling house, the away mode is set when the user is out of the dwelling house, and the server 2 is configured to operate depending on the operation mode which is currently set. For example, when a sound is generated in the away mode, the server 2 determines the occurrence of an abnormality around the plug-in connector 1. Moreover, when a state where the notification signal is not transmitted from the plug-in connector 1 in the home mode continues for a long period of time, for example, when a silent state without life sound (e.g., footstep) continues for a long period of time, the server 2 determines the occurrence of an abnormality around the plug-in connector 1.

Moreover, when the server 2 receives a notification signal denoting a determination result that the specific sound "handclap" is generated, the server 2 outputs a control command for switching a lighting state to the lighting fixture 32. Thus, the user can turn on or turn off the lighting fixture 32 without operating an operation switch or a remote controller, which improves convenience. Furthermore, the user can intentionally generate the specific sound "handclap" to operate the lighting fixture 32, and thus, it is not necessary to search for a remote controller or the like in darkness at night.

Moreover, the server 2 may be configured to turn on the lighting fixture 32 installed outdoors when a sound is generated in the away mode. This enables the lighting fixture 32 installed outdoors to function as a security lamp, which improves the security.

Note that the above-described operation of the server 2 in response to the specific sound is a mere example and is not limited to the above-described operation. For example, the server 2 may be configured to notify the management device 41 of establishing communication with the call terminal 42 when the server 2 receives a notification signal denoting a determination result that the specific sound "handclap" is generated. Thus, for example, when a user becomes unable to walk, the user claps hands to enable communication via the call terminal 42 so as to be able to seek for help. Moreover, regarding the specific sound (e.g., handclap) which can be intentionally generated by a user, the server 2 is set so as to operate as desired by the user, thereby further improving the convenience for the user.

As described above, the plug-in connector 1 of the present embodiment is the plug-in connector 1 for wiring, including the attachment plug 101 and the plug receptacle 102. This plug-in connector 1 includes the sound collector 11, the determination processor 12, and the transmitter 14. The sound collector 11 is configured to collect an ambient sound to generate a sound signal in the form of an electric signal. The determination processor 12 is configured to determine the presence or absence of an event involving generation of a specific sound based on the sound signal. The transmitter 14 is configured to transmit a notification signal based on a determination result by the determination processor 12.

According to the configuration, the plug-in connector 1 determines whether or not the specific sound is generated around the plug-in connector 1, and the plug-in connector 1 transmits the determination result as the notification signal to the server 2. The notification signal transmitted by the plug-in connector 1 to the server 2 corresponds to a determination result denoting whether or not the specific sound is generated. Thus, the data amount of the notification signal is smaller than the data amount of the sound signal of the sound collected by the sound collector 11. Therefore, communication traffic between the plug-in connector 1 and the server 2 can be reduced. Moreover, since the plug-in connector 1 is used by being connected to the socket 60, the plug-in connector 1 is continuously supplied with power form a system power supply. This enables the plug-in connector 1 to continuously monitor the specific sound and, additionally, to dispense with replacement of batteries. Thus, the configuration of the plug-in connector 1 can be simplified and reduced in size. Furthermore, the plug-in connector 1 uses the sound collector 11 to collect a sound around the plug-in connector 1. This enables the sound collector 11 to collect a sound even when an obstacle (shield) is provided around the plug-in connector 1, which reduces restrictions regarding the installation environment of the plug-in connector 1.

Moreover, the plug-in connector 1 of the present embodiment preferably includes the storage 13 configured to store reference data of the sound signal corresponding to the specific sound. The determination processor 12 preferably compares the sound signal with the reference data to determine the presence or absence of the event involving generation of the specific sound based on a comparison result.

With this configuration, the determination processor 12 identifies the sound generated around the plug-in connector 1 based on the reference data of the sound signal corresponding to the specific sound, which increases the accuracy of determination of whether or not the specific sound is generated.

Moreover, the device control system 10 of the present embodiment preferably includes the plug-in connector 1 and the server 2 (reception device) configured to receive the notification signal from the transmitter 14 of the plug-in connector 1. The server 2 (reception device) preferably controls a device (the electrical device 30, the camera 31, the lighting fixture 32, the call terminal 42, or the notification terminal 5) based on a determination result by the determination processor 12.

In this configuration, the notification signal transmitted by the plug-in connector 1 to the server 2 corresponds to a determination result denoting whether or not the specific sound is generated. Thus, the data amount of the notification signal is smaller than the data amount of the sound signal of the sound collected by the sound collector 11. Therefore, communication traffic between the plug-in connector 1 and the server 2 can be reduced. Thus, even in a communication environment with a small transmission capacity, a notification signal is transmitted from the plug-in connector 1 to the server 2 to enable the server 2 to control the device.

Next, with reference to FIGS. 2A and 2B, the structure of the plug-in connector 1 of the present embodiment will be described.

The plug-in connector 1 of the present embodiment includes a case 100 (housing) which has a rectangular cuboid shape. The case 100 has a front surface in which plug insertion holes 103 of the plug receptacle 102 are formed. The case 100 has a rear surface provided with the attachment plug 101. The case 100 accommodates the sound collector 11, the determination processor 12, the storage 13, and the transmitter 14.

The front surface of the case 100 further has a sound collection hole 104. The sound collection hole 104 is a circular through hole, and the sound collector 11 is provided in the sound collection hole 104. The sound collector 11 can collect a sound generated around the plug-in connector 1 through the sound collection hole 104. Thus, while confinement and insulation of the sound are suppressed, the sound can be efficiently collected.

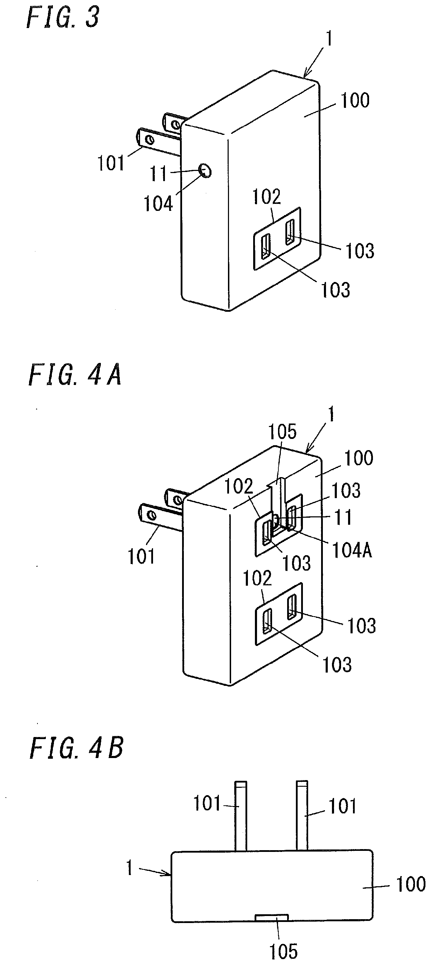

Moreover, since the plug-in connector 1 of the present embodiment has the sound collection hole 104 formed in the front surface of the case 100, foreign substances such as dust entering the case 100 through the sound collection hole 104 are reduced. The sound collection hole 104 is located above the plug receptacle 102 in the front surface of the case 100, and therefore, also when the attachment plug 611 of the power supply cable 61 is connected to the plug receptacle 102, the sound collection hole 104 is not closed by the attachment plug 611. Thus, sound insulation due to the attachment plug 611 is reduced, and the sound collector 11 can efficiently collect a sound. Note that a location where the sound collection hole 104 is formed is not limited to the front surface of the case 100. The sound collection hole 104 may be formed in a side surface (see FIG. 3) of the case 100 or in a lower surface of the case 100. Also in this case, foreign substances such as dust entering the case 100 through the sound collection hole 104 are reduced.

Moreover, the configuration of the sound collection hole 104 is not limited to the through hole. The sound collection hole 104 may be configured as a bottomed recess formed in the case 100. In this case, the sound collector 11 is provided in the recess, more specifically, at the bottom of the recess. With this configuration, also when the attachment plug 611 is connected to the plug receptacle 102, the sound collector 11 can collect a sound generated around the plug-in connector 1 through the opening of the recess. Thus, while confinement and insulation of the sound are suppressed, the sound can be efficiently collected.

As illustrated in FIGS. 4A and 4B, a sound collection hole 104A may be formed between the pair of plug insertion holes 103 in the plug receptacle 102. In the example shown in FIGS. 4A and 4B, the plug-in connector 1 is a multi-tap including two plug receptacles 102 aligned in the upward-downward direction. In the front surface of the case 100 of the plug-in connector 1, a groove 105 is formed. The groove 105 extends along the upward-downward direction from an upper end of the case 100 between the pair of plug insertion holes 103 of the upper plug receptacle 102. Moreover, at a location between the pair of plug insertion holes 103 on a groove 105, the sound collection hole 104A is formed. Thus, also when the attachment plug 611 is connected to the plug receptacle 102, a gap is formed between an opening section of the sound collection hole 104A and the attachment plug 611, and through the gap, the sound collector 11 can collect a sound generated around the plug-in connector 1. Note that the form of the groove 105 is not limited to the form described above. The groove 105 may have any form as long as the sound collection hole 104A is formed at the bottom of the groove 105 and the groove continuously extends from the sound collection hole 104A to the outside of the plug receptacle 102. That is, it is required only that the bottom of the groove 105 is partially exposed also when the attachment plug 611 is connected to the plug receptacle 102.

As described above, the plug-in connector 1 of the present embodiment preferably includes the case 100 provided with the attachment plug 101, the plug receptacle 102, and the sound collector 11. The sound collector 11 is preferably provided in the sound collection hole 104 (104A) formed in the case 100.

With this configuration, the sound collector 11 can collect a sound generated around the plug-in connector 1 through the sound collection hole 104 (104A). Thus, while confinement and insulation of the sound are suppressed, the sound can be efficiently collected.

Note that the plug-in connector 1 of the present embodiment has a configuration including one or two plug receptacles 102 but may have a configuration (may be a so-called multi-tap) including three or more plug receptacles 102.

The plug-in connector 1 may have a configuration including an electric power meter configured to measure electric power supplied from a system power supply to a device through the plug-in connector 1. In this case, the transmitter 14 notifies the server 2 of a measurement result of the electric power meter.

### Second Embodiment

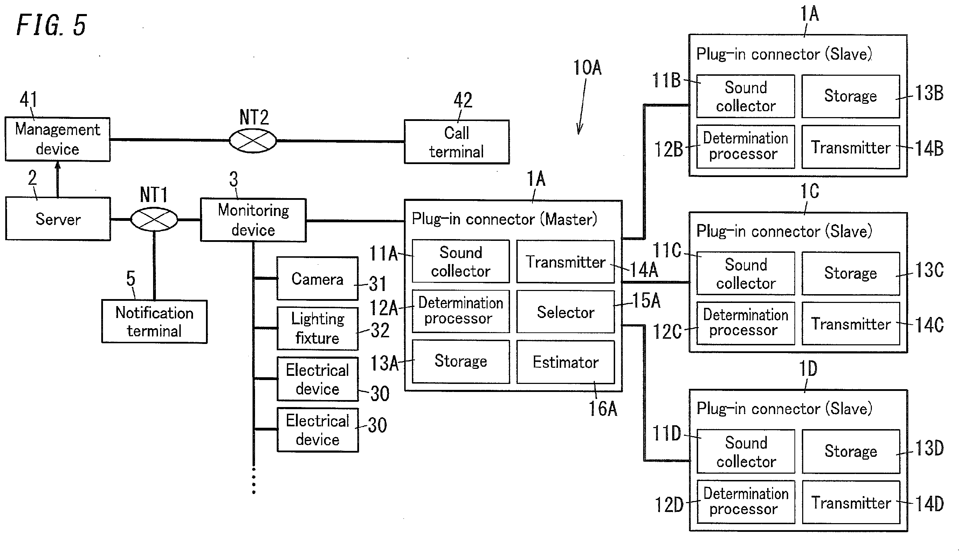

FIG. 5 schematically shows the configuration of a device control system 10A of a second embodiment. The device control system 10A of the present embodiment is different from the device control system 10 of the first embodiment in that a plurality of plug-in connectors 1 are provided. Note that configurations similar to those in the first embodiment are identified by the same reference signs as those in the first embodiment, and the description thereof will be omitted.

The device control system 10A of the present embodiment includes a plurality of (in the present embodiment, four) plug-in connectors 1A to 1D. The plug-in connector 1A of the four plug-in connectors 1A to 1D is referred to as a master 1A, and the remaining three plug-in connectors 1B to 1D are referred to as slaves 1B to 1D. Moreover, components included in the master 1A are denoted by reference signs with "A" at the end, and components included in the slaves 1B, 1C, and 1D are respectively denoted by reference signs with "B", "C", and "D" at the end. The master 1A has the configuration of the plug-in connector 1 of the first embodiment and further includes a selector 15A and an estimator 16A.

The master 1A and the slaves 1B to 1D are configured to communicate with each other by a communication means such as wired communication (e.g., power line communication) or wireless communication. Moreover, the master 1A and the slaves 1B to 1D are provided in the same room, and sound collectors 11A to 11D of the master 1A and the slaves 1B to 1D are to collect a sound generated in an identical space to generate sound signals.

The slave 1B includes a determination processor 12B configured to determine the presence of absence of an event involving generation of a specific sound based on the sound signal generated by the sound collector 11B. The slave 1B includes a transmitter 14B configured to transmit a determination result by the determination processor 12B and the sound signal generated by the sound collector 11B as a notification signal to the master 1A.

The slave 1C includes a determination processor 12C configured to determine the presence of absence of an event involving generation of a specific sound based on the sound signal generated by the sound collector 11C. The slave 1C includes a transmitter 14C configured to transmit a determination result by the determination processor 12C and the sound signal generated by the sound collector 11C as a notification signal to the master 1A.

The slave 1D includes a determination processor 12D configured to determine the presence or absence of an event involving generation of a specific sound based on a sound signal generated by the sound collector 11D. The slave 1D includes a transmitter 14D configured to transmit a determination result by the determination processor 12D and the sound signal generated by the sound collector 11D as a notification signal to the master 1A.

The master 1A includes a determination processor 12A configured to determine the presence or absence of an event involving generation of a specific sound based on the sound signal generated by the sound collector 11A.

Moreover, the selector 15A included in the master 1A is configured to select, as a selection determination result, one determination result from the determination result by the determination processor 12A of the master 1A and respective determination results by the determination processors 12B to 12D of the slaves 1B to 1D. Specifically, the selector 15A is configured to select, as the selection determination result, one of common determination results that form a largest part (majority) of a group of the determination results by the determination processors 12A to 12D of the master 1A and the three slaves 1B to 1D. For example, it is assumed that the determination result by each of the determination processors 12A to 12C of the master 1A and the slaves 1B and 1C is a determination result that a "specific sound 'glass breaking sound' is generated" and that the determination result by the determination processor 12D of the slave 1D is a determination result that "a specific sound 'handclap' is generated". In this case, the selector 15A selects the determination result that the "specific sound 'glass breaking sound' is generated". Moreover, priority levels are set in the master 1A and the three slaves 1B to 1D. In the present embodiment, the priority level decreases in the following order: the master 1A, the slave 1B, the slave 1C, and the slave 1D. When as the largest part there are one largest part and another largest part with the number of the former being the same as that of the latter, the selector 15A selects, as the selection determination result, one determination result which is included in the common determination results forming the largest part of the determination results and which is derived from the determination processor 12 in one of the plug-in connectors 1 (the master 1A and the slaves 1B to 1D) having the highest priority level. For example, when the determination results by the determination processors 12A and 12C are the same as each other, and the determination results by the determination processors 12B and 12D are the same as each other, the selector 15A selects, as the selection determination result, the determination result by the determination processor 12A of the master 1A, which has the highest priority level.

Moreover, the estimator 16A included in the master 1A is configured to estimate the location of a sound source of a specific sound and the travel direction of the sound source of the specific sound based on the sound signals generated through the sound collectors 11A to 11D of the master 1A and the slave 1B to 1D. Specifically, on the basis of the phase difference, the time difference, the frequency characteristics, the difference in sound pressure level, and the like of the waveforms of the sound signal generated by the sound collectors 11A to 11D, the estimator 16A estimates the location of the sound source and the travel direction of the sound source with reference to the installation site of the master 1A. Note that the estimator 16A may be configured to estimate only one of the location of the sound source of the specific sound and the travel direction of the sound source of the specific sound.

Then, the transmitter 14A is configured to transmit the location of the sound source of the specific sound and the travel direction of the sound source estimated by the estimator 16A, and the selection determination result selected by the selector 15A as a notification signal to the server 2. In this way, the server 2 can more specifically know the condition of the room in which the master 1A and the slaves 1B to 1D are installed. For example, in addition to the determination result that the "specific sound 'glass breaking sound' is generated", it is also possible to know the location of the broken glass in the room. Thus, the server 2 can control a device (an electrical device 30, a camera 31, a lighting fixture 32, a call terminal 42, or a notification terminal 5) more appropriately to the condition of the room in which the master 1A and the slaves 1B to 1D are installed.

As described above, the device control system 10A of the present embodiment includes the plurality of plug-in connectors 1. The plurality of plug-in connectors 1 include the at least one master 1A and the slaves 1B to 1D which are remaining plug-in connectors 1 of the plurality of plug-in connectors 1 except for the master 1A. The transmitters 14B to 14D of the slaves 1B to 1D transmit the determination results by the determination processors 12B to 12D to the master 1A as the notification signals. The master 1A further includes the selector 15A configured to select, as a selection determination result, one determination result from the determination result by the determination processor 12A of the master 1A and the determination results by the determination processors 12B to 12D of the slaves 1B to 1D. The transmitter 14A of the master 1A transmits the selection determination result as the notification signal to the server 2 (reception device).

With this configuration, only one determination result of the determination results by the determination processors 12A to 12D of the master 1A and the slaves 1B to 1D is transmitted as the notification signal to the server 2. Thus, the communication traffic can be more reduced than in the case where the master 1A and the slaves 1B to 1D individually transmit a notification signal.

Moreover, the device control system 10A preferably includes the plurality of slaves 1B to 1D. The selector 15A preferably selects, as the selection determination result, one of common determination results that form a largest part of the determination result by the determination processor 12A of the master 1A and the determination results by the determination processors 12B to 12D of the plurality of slaves 1B to 1D.

With this configuration, a determination result which is to be notified to the server 2 is determined by majority decision from the determination results by the determination processors 12A to 12D of the master 1A and the slaves 1B to 1D. This increases the accuracy of the determination result of whether or not the specific sound is generated, the determination result being to be notified to the server 2.

Moreover, in the device control system 10A of the present embodiment, the transmitters 14B to 14D of the slaves 1B to 1D preferably transmit the determination results by the determination processors 12B to 12D and the sound signals of the sound collectors 11B to 11D as notification signals to the master 1A. The master 1A preferably further includes the estimator 16A configured to estimate at least one of the location of the sound source of the specific sound and the travel direction of the sound source on the basis of the sound signal of the master 1A and the sound signals of the slaves 1B to 1D. The transmitter 14A of the master 1A preferably transmits the selection determination result selected by the selector 15A and the estimation result estimated by the estimator 16A as a notification signal to the reception device.

With this configuration, the server 2 (reception device) is notified of a result obtained by estimating at least one of the location and the travel direction of the sound source of the specific sound, and thus, the accuracy for determining the specific sound is further improved.

Note that for the master 1A and the slaves 1B to 1D, plug-in connectors 1 having different configurations may be adopted or plug-in connectors 1 having the same configurations may be adopted. When the plug-in connectors 1 having the same configurations are adopted for the master 1A and the slaves 1B to 1D, each plug-in connector 1 preferably includes a change-over switch configured to switch between a master mode in which the plug-in connector 1 is allowed to function as a master and a slave mode in which the plug-in connector 1 is allowed to function as a slave. The change-over switch is operated by a user so as to cause each plug-in connector 1 to function as a master or a slave.

### Third Embodiment

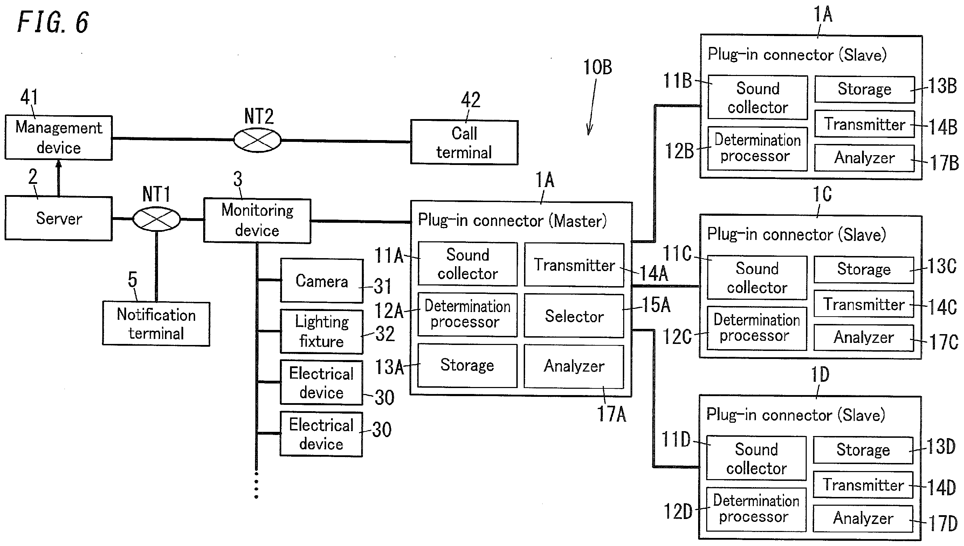

FIG. 6 schematically shows the configuration of a device control system 10B of a third embodiment. The device control system 10B of the present embodiment includes a plurality of (in the present embodiment, four) plug-in connectors 1A to 1D (a master 1A and slaves 1B to 1D). The master 1A and the slaves 1B, 1C, and 1D respectively include analyzers 17A, 17B, 17C, and 17D each including, for example, a microcomputer. Note that configurations similar to those in the second embodiment are identified by the same reference signs as those in the second embodiment, and the description thereof will be omitted.

The analyzer 17A of the master 1A is configured to analyze reverberation components contained in a sound signal generated by a sound collector 11A. Specifically, the analyzer 17A obtains, on the basis of the sound signal, a ratio of a peak value of a sound pressure level of a reflected sound (reverberation sound) to a peak value of a sound pressure level of a direct sound as a reverberation component contained in the sound signal. Note that the analyzer 17A may determine that a sound obtained by reducing a predetermined sound pressure level from the peak value of the sound pressure level of the direct sound is the reflected sound (reverberation sound). Similarly to the analyzer 17A, each of the analyzers 17B to 17D may obtain, on the basis of a sound signal generated by a corresponding one of the sound collectors 11B to 11D, a ratio of a peak value of a sound pressure level of a reflected sound (reverberation sound) to the peak value of the sound pressure level of the direct sound as a reverberation component. Moreover, the transmitters 14B to 14D of the slaves 1B to 1D transmit data associating analysis results of the analyzers 17B to 17D respectively with determination results of the determination processors 12B to 12D as notification signals to the master 1A.

The selector 15A of the master 1A selects, as a selection determination result, one determination result from the determination results by the determination processors 12A to 12D on the basis of the analysis results by the analyzers 17A to 17D of the master 1A and the slaves 1B to 1D. Specifically, the selector 15A selects, as the selection determination result, a determination result corresponding to an analysis result, of the analysis results by the analyzers 17A to 17D, which represents the fewest reverberation components. That is, the selector 15A selects, as the selection determination result, a determination result corresponding to an analysis result, of the analysis results by the analyzers 17A to 17D, which represents the lowest ratio of the peak value of the sound pressure level of the reflected sound (reverberation sound) to the peak value of the sound pressure level of the direct sound. Here, the peak value of the sound pressure level of the direct sound increases as the distance to the sound source decrease, and the peak value of the sound pressure level of the direct sound decreases as the distance to the sound source increases. On the other hand, the peak value of the sound pressure level of the reflected sound (reverberation sound) is substantially constant regardless of the distance to the sound source. Thus, it is possible to estimate such that the lower the ratio of the peak value of the sound pressure level of the reflected sound (reverberation sound) to the peak value of the sound pressure level of the direct sound is, that is, the fewer the reverberation components are, the shorter the distance to the sound source. That is, the selector 15A selects, as the selection determination result, a determination result by the determination processor 12 of the plug-in connector 1 which is one of the master 1A and the slaves 1B to 1D estimated to be the closest to the sound source. Note that when one master and one slave are provided, the selector 15A selects, as the selection determination result, a determination result corresponding to an analysis result representing fewer reverberation components.

Then, the transmitter 14A of the master 1A transmits the selection determination result selected by the selector 15A as the notification signal to the server 2.

As described above, in the device control system 10B of the present embodiment, the master 1A and the slaves 1B, 1C, and 1D preferably further include the analyzers 17A, 17B, 17C, and 17D, respectively, configured to analyze the reverberation components contained in the sound signal. The transmitters 14B to 14D of the slaves 1B to 1D preferably associate the determination results by the determination processors 12B to 12D with the analysis results by the analyzers 17B to 17D to obtain notification signals and transmit the notification signals to the master 1A. The selector 15A of the master 1A preferably selects, as the selection determination result, a determination result corresponding to an analysis result representing the reverberation components which are fewest from the determination result by the determination processor 12A of the master 1A and the determination results by the determination processors 12B to 12D of the slaves 1B to 1D.

With this configuration, the determination result by the plug-in connector 1 (one of the master 1A and the slaves 1B to 1D) closest to the sound source of the specific sound is used as the notification signal to be transmitted to the server 2 (reception device). This increases the accuracy of the determination result of whether or not the specific sound is generated, the determination result being to be transmitted to the server 2.

Note that the above-described embodiment is a mere example of the present invention. Therefore, the present invention is not limited to the above-described embodiment. Even in configurations other than that illustrated in this embodiment, various modifications may be made depending on design and the like without departing from the technical idea of the present invention.

### Reference Signs List

- 1: Plug-in Connector
- 1A: Master
- 1B to 1D: Slave
- 10, 10A, 10B: Apparatus Control System
- 11 (11A to 11D): Sound Collector
- 12 (12A to 12D): Determination Processor
- 13 (13A to 13D): Storage
- 14 (14A to 14D): Transmitter
- 15A: Selector
- 16A: Estimator
- 17A to 17D: Analyzer
- 100: Case
- 101: Attachment Plug
- 102: Plug Receptacle
- 104, 104A: Sound Collection Hole
- 2: Reception Device (Server)
- 30: Electrical Device (Apparatus)
- 31: Camera (Apparatus)
- 32: Lighting Fixture (Apparatus)
- 42: Call Terminal (Apparatus)
- 5: Notification Terminal (Apparatus)

## Claims

1. A device control system (10,10A,10B), comprising:
a plurality of plug-in connectors (1), provided for wiring, each including an attachment plug (101) and a plug receptacle (102); and
a reception device (2), wherein
each of the plurality of plug-in connectors (1) further includes:
a sound collector (11) configured to collect an ambient sound to generate a sound signal in form of an electric signal;
a determination processor (12) configured to determine a presence or absence of an event involving generation of a specific sound based on the sound signal; and
a transmitter (14) configured to transmit a notification signal based on a determination result by the determination processor (12);
**characterized in that**
the plurality of the plug-in connectors (1) include at least one master (1A) and at least one slave which is a remaining plug-in connector (1) of the plurality of the plug-in connectors (1) except for the master (1A),
the transmitter (14) of the at least one slave is configured to transmit a determination result by a corresponding determination processor (12) to the at least one master (1A) as the notification signal,
the at least one master (1A) further includes a selector (15A) configured to select, as a selection determination result, one determination result of a determination result by the determination processor (12) of the at least one master (1A) and the determination result by the determination processor (12) of the at least one slave (1B,1C,1D), and
the transmitter (14) of the at least one master (1A) is configured to transmit the selection determination result as the notification signal to the reception device (2),
the reception device (2) is configured to receive the notification signal from the transmitter (14) of the at least one master (1A), and control a device based on the determination result by the determination processor (12).

2. The device control system (10,10A,10B) according to claim 1, wherein
the device control system (10,10A,10B) includes a plurality of slaves (1B,1C,1D) as the at least one slave (1B,1C,1D), and
the selector (15A) is configured to select, as the selection determination result, one of common determination results that form a largest part of the determination result by the determination processor (12) of the at least one master (1A) and respective determination results by determination processors (12) of the plurality of slaves (1B,1C,1D).

3. The device control system (10,10A,10B) according to claim 1, wherein
each of the at least one master (1A) and the at least one slave (1B,1C,1D) further includes an analyzer (17A,17B,17C,17D) configured to analyze reverberation components contained in the sound signal,
the transmitter (14) of the at least one slave (1B,1C,1D) is configured to associate the determination result by the corresponding determination processor (12) with an analysis result by the analyzer (17A,17B,17C,17D) to obtain the notification signal and transmits the notification signal to the at least one master (1A),
the selector (15A) is configured to select, as the selection determination result, a determination result associated with an analysis result corresponding to a minimum amount of the reverberation components, of the determination result by the determination processor (12) of the at least one master (1A) and the determination result by the determination processor (12) of the at least one slave (1B,1C,1D).

4. The device control system (10,10A,10B) according to any one of claims 1 to 3, wherein
the transmitter (14) of the at least one slave (1B,1C,1D) is configured to transmit the determination result by the corresponding determination processor (12) and the sound signal of the sound collector (11) as the notification signal to the at least one master (1A),
the at least one master (1A) further includes an estimator (16A) configured to estimate at least one of a location of a sound source of the specific sound and a travel direction of the sound source based on the sound signal of the at least one master and the sound signal of the at least one slave (1B,1C,1D), and
the transmitter (14) of the at least one master (1A) is configured to transmit the selection determination result selected by the selector (15A) and an estimation result by the estimator (16A) as the notification signal to the reception device (2).

5. The device control system (10,10A,10B) according to any one of claims 1 to 4, wherein
each of the plurality of plug-in connectors (1) further includes a storage (13) configured to store reference data of the sound signal corresponding to the specific sound, wherein
the determination processor (12) is configured to compare the sound signal with the reference data to determine the presence or absence of the event based on a comparison result.

6. The device control system (10,10A,10B) according to any one of claims 1 to 5, wherein
each of the plurality of plug-in connectors (1) further includes a case (100) provided with the attachment plug (101), the plug receptacle (102), and the sound collector (11), wherein
the sound collector (11) is provided in a sound collection hole (104,104A) formed in the case (100).

## Patentansprüche

1. Vorrichtungssteuerungssystem (10, 10A, 10B), umfassend:
mehrere einsteckbare Verbinder (1), die zur Verdrahtung vorgesehen sind und jeweils einen Befestigungsstecker (101) und eine Steckdose (102) enthalten; und
eine Empfangsvorrichtung (2), wobei
jeder der mehreren einsteckbaren Verbinder (1) ferner enthält:
einen Schallsammler (11), der konfiguriert ist, um Umgebungsschall zu sammeln, um ein Schallsignal in Form eines elektrischen Signals zu erzeugen;
einen Bestimmungsprozessor (12), der konfiguriert ist, um ein Vorhandensein oder Fehlen eines Ereignisses zu bestimmen, das ein Erzeugen eines bestimmten Schalls basierend auf dem Schallsignal verwendet; und
einen Sender (14), der konfiguriert ist, um ein Benachrichtigungssignal basierend auf einem Bestimmungsergebnis durch den Bestimmungsprozessor (12) zu senden;
**dadurch gekennzeichnet, dass**
die mehreren einsteckbaren Verbinder (1) mindestens einen Master (1A) und mindestens einen Slave enthalten, der ein verbleibender einsteckbarer Verbinder (1) der mehreren einsteckbaren Verbinder (1) mit Ausnahme des Masters (1A) ist,
der Sender (14) des mindestens einen Slaves konfiguriert ist, um ein Bestimmungsergebnis durch einen entsprechenden Bestimmungsprozessor (12) an den mindestens einen Master (1A) als Benachrichtigungssignal zu senden,
der mindestens eine Master (1A) ferner einen Selektor (15A) enthält, der konfiguriert ist, um als Auswahlbestimmungsergebnis ein Bestimmungsergebnis eines Bestimmungsergebnisses durch den Bestimmungsprozessor (12) des mindestens einen Masters (1A) und das Bestimmungsergebnis durch den Bestimmungsprozessor (12) des mindestens einen Slaves (1B,1C,1D) auszuwählen, und
der Sender (14) des mindestens einen Masters (1A) konfiguriert ist, um das Auswahlbestimmungsergebnis als Benachrichtigungssignal an die Empfangsvorrichtung (2) zu senden,
die Empfangsvorrichtung (2) konfiguriert ist, um das Benachrichtigungssignal von dem Sender (14) des mindestens einen Masters (1A) zu empfangen und eine Vorrichtung basierend auf dem Bestimmungsergebnis durch den Bestimmungsprozessor (12) zu steuern.

2. Vorrichtungssteuerungssystem (10, 10A, 10B) nach Anspruch 1, wobei
das Vorrichtungssteuerungssystem (10, 10A, 10B) mehrere Slaves (1B, 1C, 1D) als mindestens einen Slave (1B, 1C, 1D) enthält, und
der Selektor (15A) konfiguriert ist, um als Auswahlbestimmungsergebnis eines der gemeinsamen Bestimmungsergebnisse auszuwählen, die einen größten Teil des Bestimmungsergebnisses durch den Bestimmungsprozessor (12) des mindestens einen Masters (1A) und entsprechende Bestimmungsergebnisse durch Bestimmungsprozessoren (12) der mehreren Slaves (1B, 1C, 1D) bilden.

3. Vorrichtungssteuerungssystem (10, 10A, 10B) nach Anspruch 1, wobei
jeder der mindestens einen Master (1A) und der mindestens einen Slaves (1B, 1C, 1D) ferner einen Analysator (17A, 17B, 17C, 17D) enthält, der konfiguriert ist, um die im Schallsignal enthaltenen Nachhallkomponenten zu analysieren, der Sender (14) des mindestens einen Slaves (1B, 1C, 1D) konfiguriert ist, um das Bestimmungsergebnis durch den entsprechenden Bestimmungsprozessor (12) einem Analyseergebnis durch den Analysator (17A, 17B, 17C, 17D) zuzuordnen, um das Benachrichtigungssignal zu erhalten, und das Benachrichtigungssignal an den mindestens einen Master (1A) sendet,
der Selektor (15A) konfiguriert ist, um als Auswahlbestimmungsergebnis ein Bestimmungsergebnis auszuwählen, das einem Analyseergebnis zugeordnet ist, das einer Mindestmenge der Nachhallkomponenten des Bestimmungsergebnisses durch den Bestimmungsprozessor (12) des mindestens einen Masters (1A) und des Bestimmungsergebnisses durch den Bestimmungsprozessor (12) des mindestens einen Slaves (1B, 1C, 1D) entspricht.

4. Vorrichtungssteuerungssystem (10, 10A, 10B) nach einem der Ansprüche 1 bis 3, wobei
der Sender (14) des mindestens einen Slaves (1B, 1C, 1D) konfiguriert ist, um das Bestimmungsergebnis durch den entsprechenden Bestimmungsprozessor (12) und das Schallsignal des Schallsammlers (11) als das Benachrichtigungssignal an den mindestens einen Master (1A) zu senden,
der mindestens eine Master (1A) ferner einen Schätzer (16A) enthält, der konfiguriert ist, um mindestens eines von einer Position einer Schallquelle des spezifischen Schalls und einer Laufrichtung der Schallquelle basierend auf dem Schallsignal des mindestens einen Masters und dem Schallsignal des mindestens einen Slaves (1B, 1C, 1D) zu schätzen, und
der Sender (14) des mindestens einen Masters (1A) konfiguriert ist, um das Auswahlbestimmungsergebnis, das durch den Selektor (15A) ausgewählt ist, und ein Schätzergebnis von dem Schätzer (16A) als Benachrichtigungssignal an die Empfangsvorrichtung (2) zu senden.

5. Vorrichtungssteuerungssystem (10, 10A, 10B) nach einem der Ansprüche 1 bis 4, wobei
jeder der mehreren einsteckbaren Verbinder (1) ferner einen Speicher (13) enthält, der konfiguriert ist, um Referenzdaten des Schallsignals entsprechend dem speziellen Schall zu speichern, wobei
der Bestimmungsprozessor (12) konfiguriert ist, um das Schallsignal mit den Referenzdaten zu vergleichen, um ein Vorhandensein oder Fehlen des Ereignisses basierend auf einem Vergleichsergebnis zu bestimmen.

6. Vorrichtungssteuerungssystem (10, 10A, 10B) nach einem der Ansprüche 1 bis 5, wobei
jeder der mehreren einsteckbaren Verbinder (1) ferner ein Gehäuse (100) aufweist, das mit dem Befestigungsstecker (101), der Steckdose (102) und dem Schallsammler (11) versehen ist, wobei
der Schallsammler (11) in einem Schallabsorptionsloch (104, 104A) vorgesehen ist, das in dem Gehäuse (100) ausgebildet ist.

## Revendications

1. Système de commande de dispositif (10, 10A, 10B), comprenant :
une pluralité de connecteurs enfichables (1), fournis à des fins de câblage, incluant chacun une prise de branchement (101) et une prise femelle (102) ; et
un dispositif de réception (2), dans lequel
chaque connecteur de la pluralité de connecteurs enfichables (1) inclut en outre :
un collecteur de son (11) configuré de manière à collecter un son ambiant en vue de générer un signal sonore sous la forme d'un signal électrique ;
un processeur de détermination (12) configuré de manière à déterminer la présence ou l'absence d'un événement impliquant la génération d'un son spécifique sur la base du signal sonore ; et
un émetteur (14) configuré de manière à transmettre un signal de notification sur la base d'un résultat de détermination fourni par le processeur de détermination (12) ;
**caractérisé en ce que** :
la pluralité des connecteurs enfichables (1) inclut au moins un connecteur maître (1A) et au moins un connecteur esclave, lequel correspond à un connecteur enfichable restant (1) de la pluralité des connecteurs enfichables (1), à l'exception du connecteur maître (1A) ;
l'émetteur (14) dudit au moins un connecteur esclave est configuré de manière à transmettre un résultat de détermination par le biais d'un processeur de détermination correspondant (12), audit au moins un connecteur maître (1A), sous la forme du signal de notification ;
ledit au moins un connecteur maître (1A) inclut en outre un sélecteur (15A) configuré de manière à sélectionner, en tant qu'un résultat de détermination de sélection, un résultat de détermination parmi un résultat de détermination fourni par le processeur de détermination (12) dudit au moins un connecteur maître (1A) et le résultat de détermination fourni par le processeur de détermination (12) dudit au moins un connecteur esclave (1B, 1C, 1D) ; et
l'émetteur (14) dudit au moins un connecteur maître (1A) est configuré de manière à transmettre le résultat de détermination de sélection, sous la forme du signal de notification, au dispositif de réception (2) ;
le dispositif de réception (2) est configuré de manière à recevoir le signal de notification en provenance de l'émetteur (14) dudit au moins un connecteur maître (1A), et à commander un dispositif sur la base du résultat de détermination fourni par le processeur de détermination (12).

2. Système de commande de dispositif (10, 10A, 10B) selon la revendication 1, dans lequel :
le système de commande de dispositif (10, 10A, 10B) inclut une pluralité de connecteurs esclaves (1B, 1C, 1D) en tant que ledit au moins un connecteur esclave (1B, 1C, 1D) ; et
le sélecteur (15A) est configuré de manière à sélectionner, en tant que le résultat de détermination de sélection, l'un parmi des résultats de détermination communs qui forment la plus grande partie du résultat de détermination fourni par le processeur de détermination (12) dudit au moins un connecteur maître (1A) et des résultats de détermination respectifs fournis par des processeurs de détermination (12) de la pluralité de connecteurs esclaves (1B, 1C, 1D).

3. Système de commande de dispositif (10, 10A, 10B) selon la revendication 1, dans lequel :
chaque dispositif parmi ledit au moins un connecteur maître (1A) et ledit au moins un connecteur esclave (1B, 1C, 1D) inclut en outre un analyseur (17A, 17B, 17C, 17D) configuré de manière à analyser des composantes de réverbération contenues dans le signal sonore ;
l'émetteur (14) dudit au moins un connecteur esclave (1B, 1C, 1D) est configuré de manière à associer le résultat de détermination fourni par le processeur de détermination correspondant (12) à un résultat d'analyse fourni par l'analyseur (17A, 17B, 17C, 17D), en vue d'obtenir le signal de notification, et transmet le signal de notification audit au moins un connecteur maître (1A) ;
le sélecteur (15A) est configuré de manière à sélectionner, en tant que le résultat de détermination de sélection, un résultat de détermination associé à un résultat d'analyse correspondant à une quantité minimale des composantes de réverbération, du résultat de détermination fourni par le processeur de détermination (12) dudit au moins un connecteur maître (1A) et du résultat de détermination fourni par le processeur de détermination (12) dudit au moins un connecteur esclave (1B, 1C, 1D).

4. Système de commande de dispositif (10, 10A, 10B) selon l'une quelconque des revendications 1 à 3, dans lequel :
l'émetteur (14) dudit au moins un connecteur esclave (1B, 1C, 1D) est configuré de manière à transmettre le résultat de détermination fourni par le processeur de détermination correspondant (12) et le signal sonore du collecteur de son (11), sous la forme du signal de notification, audit au moins un connecteur maître (1A) ;
ledit au moins un connecteur maître (1A) inclut en outre un estimateur (16A) configuré de manière à estimer au moins l'un des éléments parmi un emplacement d'une source sonore du son spécifique et une direction de déplacement de la source sonore, sur la base du signal sonore dudit au moins un connecteur maître et du signal sonore dudit au moins un connecteur esclave (1B, 1C, 1D) ; et
l'émetteur (14) dudit au moins un connecteur maître (1A) est configuré de manière à transmettre le résultat de détermination de sélection sélectionné par le sélecteur (15A) et un résultat d'estimation fourni par l'estimateur (16A), sous la forme du signal de notification, au dispositif de réception (2).

5. Système de commande de dispositif (10, 10A, 10B) selon l'une quelconque des revendications 1 à 4, dans lequel :
chaque connecteur de la pluralité de connecteurs enfichables (1) inclut en outre une mémoire (13) configurée de manière à stocker des données de référence du signal sonore correspondant au son spécifique, dans lequel
le processeur de détermination (12) est configuré de manière à comparer le signal sonore aux données de référence, en vue de déterminer la présence ou l'absence de l'événement sur la base d'un résultat de comparaison.

6. Système de commande de dispositif (10, 10A, 10B) selon l'une quelconque des revendications 1 à 5, dans lequel :
chaque connecteur de la pluralité de connecteurs enfichables (1) inclut en outre un boîtier (100) équipé de la prise de branchement (101), de la prise femelle (102) et du collecteur de son (11), dans lequel
le collecteur de son (11) est fourni dans un orifice de collecte de son (104, 104A) formé dans le boîtier (100).
